Europäisches Patentamt

European Patent Office

Office européen des brevets

(19)

(11) Publication number: 0 316 047
A1

# EUROPEAN PATENT APPLICATION

(21) Application number: 88202496.1

(22) Date of filing: 09.11.88

(51) Int. Cl.4: B01D 15/00

(30) Priority: 11.11.87 NL 8702693

(43) Date of publication of application:
17.05.89 Bulletin 89/20

(84) Designated Contracting States:
AT BE CH DE ES FR GB GR IT LI LU NL SE

(71) Applicant: Nederlandse Organisatie voor
Toegepast Natuurwetenschappelijk
Onderzoek TNO
P.O. Box 297
NL-2501 BD Den Haag(NL)

(72) Inventor: Schneiders, Leonardus Hubertus
Jan Maria
Laan van Vollenhove 128
NL-3706 AA Zeist(NL)

(54) A method for the separating of amphoteric mixtures in adsorption columns and adsorption beds and an apparatus therefor.

(57) A method and an apparatus for separating pro-
teins or other amphoteric mixtures into their compo-
nent parts by utilising the fact that the degree of
adsorption by a certain adsorbent per component is
dependent on the prevailing pH in which the material
is transported through an adsorption column or over
an adsorption-bed. To that end the pH is varied by
the diffusion of an acid or basic gas such as CO or
NH in the adsorbent in a direction transverse to the
liquid-transporting-direction, such, that the compo-
nents are separated from the mixture in a sideways
direction. The pH-regulating agent preferably is ad-
minsitered via a membrane.

⑬ CO2 storage vessel    ⑫

⑭ N2 storage vessel

exhaust of gases

⑧

⑨

⑩

④

① ② ③

⑤

⑪

⑥

acidic solution

② ②   adsorption column   ③

④

⑦

basic solution

⑤

⑮

⑯

▨▨▨ ion exchanger     ——— liquid flow

▬▬▬ silicone rubber membrane     - - - - gas flow

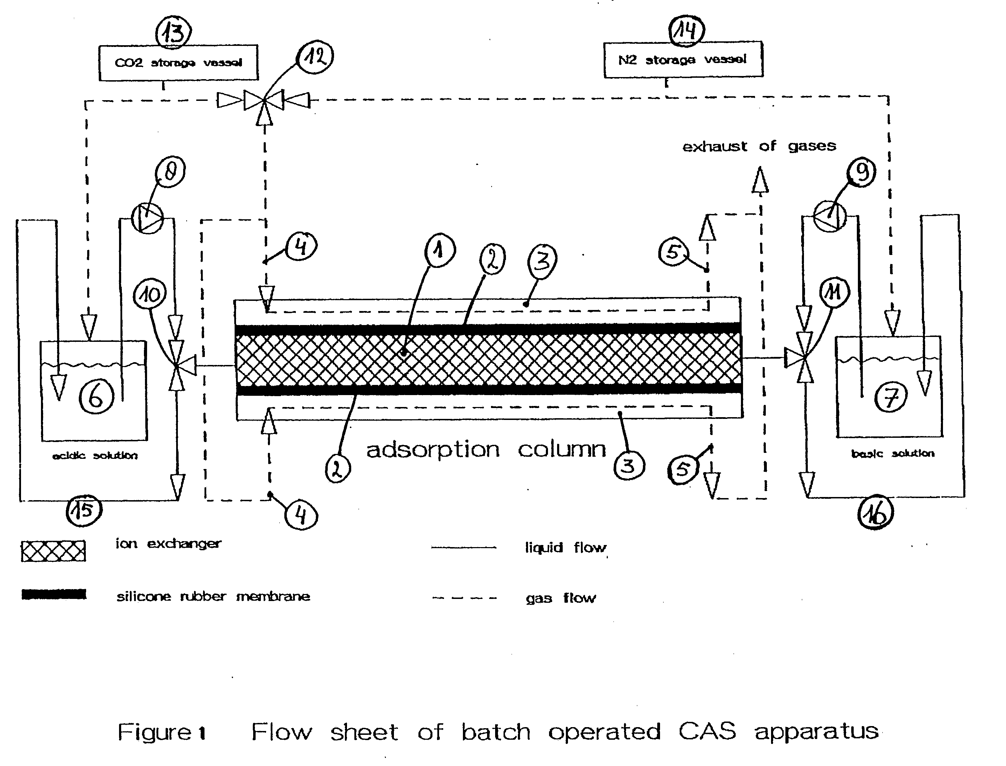

Figure 1    Flow sheet of batch operated CAS apparatus

1a

# A method for the separation of amphoteric mixtures in adsorption columns and adsorption beds and an apparatus therefor.

The invention relates to a method for separating mixtures of proteins or of other amphoteric compounds into their components by utilising the fact that the degree of adsorption by a certain adsorbent per component is dependent on the prevailing pH at which the material is transported through an adsorption column or through an adsorption bed. Such methods are known, for example they are carried out in an adsorbent provided column into which a mixture to be separated is fed and in which the required pH changes are achieved by feeding buffer solutions of the required pH through the column in a direction corresponding to that in which the components to be separated are transported.

In cyclic adsorbtive separating processes (also described as parametric pumping) the material to be separated is pumped backward and forward through an adsorption column whilst the pH is changed synchronously coupled to the direction of flow by changing the buffer solution.

Coupling of the pH to the liquid flowing through the column results in a pH gradient in the column. In general, a pH gradient will have a separation diminishing efect on the process because a component to be separated will be partially found in a region with a pH at which the component is still strongly bound to the adsorbent and only partially at a pH at which this component is no longer bound. In such a case only part of the column works effectively. The unfavourable effects of pH gradients will be commensurately stronger as the separation becomes more subtle, that is to say that it must be carried out within a more narrowly defined pH range.

In the case of proteins for example, an endeavour will be made to allow the pH to see-saw around the iso-electric points which, according to the present state of the technology, is not easily possible. Changing the pH by passing buffer-solutions through columns has also the objection that in general a high demand for chemicals will be necessary due to the continous use of a buffer in the column.

The method according to the invention meets both the quoted objections and exhibits the characteristics that the pH is varied by diffusion of an acid forming or a base forming gaseous compound in the absorbent and well in a direction perpendicular to the transporting direction and thus the components are separated from the mixture in a sideways direction. For example, $CO_2$ and $NH_3$ can be chosen as the acid forming and base forming components respectively.

Achievement of the method quoted herefor requires a special embodiment of the adsorption process.

Changing the pH perpendicular to the direction of flow through the column requires that the adsorbent be distributed in a very thin layer because the pH change must always be achieved by diffusion of the pH changing agent in the adsorbent and because diffusion is a slow process. It is also necessary that the separating wall, through which pH changing agent is administered to the adsorbent, is well permeable for the pH changing agent. To this end and according to an exemplary embodiment of the method of the invention, the use of a membrane is most suitable herefor. This membrane must not be permeable by the components to be separated and neither must it be strongly permeable by water, whilst in the last case however a small degree of permeability is of no objection.

The regulation of the pH with a gas indeed requires that the membrane possesses a high degree of permeability for the gas in question.

The pH regulation through the membrane can now be achieved by the choice of a suitable gas pressure applied against the membrane wall. In the case of application of a high $CO_2$ pressure for example, the pH shifts to the acidic side and with a low partial $CO_2$ pressure to the basic side.

Preferably, use will be made of th $HCO_3^-$ $-CO_3^{2-}$ -balance as a function of the $CO_2$ pressure as the "basic" buffer electrolyte in the adsorbent when using $CO_2$ as the pH regulating agent.

In principle, a pH range of from 4 to 10 can be covered.

In certain cases NH can also be used as a regulating agent at a high pH for example.

Different embodiments are possible in order to change the pH "stationarily" in the adsorption column.

The simplest embodiment is a sandwich of thin adsorption layers embedded between membranes as illustrated schematically in figure 1.

A more advanced embodiment is the spirally-wound module which is analogous to models which are applied in membrane-technology. In this case the spacer on the permeate side is formed by the adsorbent whilst the pH regulating gas is administered via the spacer at the retentive side. The technology for making such modules is well-known from the field of membrane technology itself.

A further embodiment comprises a membrane module with hollow fibres which is used for the application of the pH regulating agent whether or not it is filled with an adsorbent within the internal space in the hollow fibres or within the space around the hollow fibres.

A variation of the principle outlined herefor is that in which entirely no adsorbent at all is used but where the membrane wall is provided with an adsorbing component, ion-exchanging groups for example. The membrane wall itself then serves as the adsorbent and the diffusion-path length for pH-regulation is extremely short.

Experiments carried out on a 2 mm. thick adsorption bed enclosed between two silicon rubber membranes and a 0.015 M $NaHCO_3$ "basic" buffer solution of pH 8 showed that the pH adjustment took place rapidly in 2 minutes at a value of pH6 with $CO_2$ at atmospheric pressure administered via silicone rubber membranes.

The reverse process in which $CO_2$ is removed from the system by flushing $N_2$ along the membranes, takes place slowly. In the more subtle pH regulation over a narrow pH range, this presents no objection however.

Figure 1 schematically illustrates an apparatus for the cyclic adsorbtive separation process. The separating cell comprises a layer of well packed adsorbent of 100 x 50 x 2 mm. (1), (for example Pharmacia DEAE-sepharose CL-6B) sandwiched between two membranes of 100 x 50 x 0.07 mm. (2) which are well permeable to gases but impermeable to liquids and the dissolved components therein (silicone rubber membranes for example). The two membranes (2) are supported on the outside by highly porous supporting materials (Portal plate for example) in order to maintain the packed layer of adsorbent in place and so that this layer can be flowed through in the longitudinal direction with little axial dispersion. The air-chambers (3) are located on the outside of the supporting materials and through these chambers $CO_2$ gas, $N_2$ gas or a mixture thereof can flow along the membrane supporting materials via the inlets (4) and be discharged via the discharge lines (5).

A solution of 0.1 M NaCl and 0.015 M of $NaHCO_3$ is made and the packed layer of adsorb is thoroughly flushed with an amount of this solution . The remaining solution is then divided between the two storage vessels (6) and (7).

$CO_2$ is conducted to the storage vessel (6) from the $CO_2$ cylinder (13) and through which the quoted solution reaches a pH value of 6. $N_2$ is conducted to the storage vessel (7) from the $N_2$ cylinder (14) and through which the pH value in this solution reaches a value above 9. Following this, the three-way valve (12) is operated in such a manner that the $CO_2$ flows through the air-chambers (3). After two minutes the pump (8) is switched on and the three-way valves (10) and (11) are operated such that the liquid can be pumped from the storage vessel (6) through the adsorbent layer to the storage vessel (7). The pH of the liquid flowing from line (16) can be measured and by then it has reached a value of 6. After a quantity of liquid greater than the entire liquid content of the absorbent layer (10 ml) has been pumped from the storage vessel (6), the pump (8) is switched off and the valves (10) and (11) are set to their neutral positions. Following this, the valve (12) is operated such that the $N_2$ can flow through the air-chambers (3). After 30 minutes the pump (9) is switched on and the valves (10) and (11) operate in such a manner that the liquid is pumped from the storage vessel (7) through the adsorbent layer to the storage vessel (6). The pH of the liquid flowing from the line (15) is measured and has reached a pH value of 8. After a good 10 ml of liquid has again been pumped out of the storage vessel (7), the pump (9) is switched off and the valves (10) and (11) are operated to their neutral positions. Following this, the valve (12) is operated such that the $CO_2$ can flow through the air-chambers (3) and the following cycle can begin. The pH-values are measured during a number of cycles and through which a number of reproducable values are achieved.

## Claims

1. A method for separating mixtures of proteins or of other amphoteric compounds into their component parts by utilising the fact that the degrees of adsorption by a certain adsorbent per componenent is dependent on the prevailing pH at which the material is transported through an adsorption column or through an adsorbtion bed and characterised in that the pH is varied by the diffusion of an acid forming or a base forming gaseous component in the adsorbent and well in a direction transverse to the liquid transporting direction and thus the components are separated from the mixture in a sideways direction.

2. A method as claimed in claim 1 characterised in that the pH regulating agent is adminsitered via a membrane which is located parallel to the direction of flow of the column or the bed.

3. A method as claimed in claim 1 characterised in that the pH regualting agent is an acid forming or a base forming gas such as $CO_2$ or $NH_3$.

4. Apparatus for carrying out the method as claimed in claim 2 or claim 3 characterised in that the column or the bed is provided in the longitudinal direction with a membrane which is permeaable to the pH changing agent.

5. Apparatus as claimed in claim 4 characterised in that the adsorption column or adsorption bed comprises a number of thin layers enclosed between membranes.

6. Apparatus as claimed in claim 4 characterised in that the adsorption column comprises a spirally-wound membrane module of which the permeate spacer is formed by the adsorbent and the retentive-space is used for administering the pH regulating gas.

7. Apparatus as claimed in claim 4 characterised in that the adsorption column is a hollow fibre membrane module which is filled inside or outside of the hollow fibres with an adsorbent and in which the non-filled space is used for administering the pH regulating gas.

8. Apparatus as claimed in any one of claims 4, 6 or 7 characterised in that the adsorption column or adsorption bed is formed by the membrane wall itself and in which one side of the membrane wall is chosen for the transport of liquid and the other side for the supply of the pH regulating gases.

EP 0 316 047 A1

| | | |
|---|---|---|
| ⨉⨉⨉⨉ | ion exchanger | ──────── liquid flow |
| ▬▬▬ | silicone rubber membrane | ─ ─ ─ ─ gas flow |

**13** CO2 storage vessel

**14** N2 storage vessel

**12**

exhaust of gases

**8**

**9**

**4** **1** **2** **3** **5**

**10** **11**

**6** acidic solution

adsorption column **3** **5**

**7** basic solution

**15**

**4**

**16**

Figure 1    Flow sheet of batch operated CAS apparatus

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 168 140 (THE TRUSTEES OF COLUMBIA UNIVERSITY IN THE CITY OF NEW YORK) <br> * Page 22, line 21 - page 24, line 14 * <br>--- | 1,2,4,8 | B 01 D 15/00 |
| A | US-A-4 584 075 (GOLDSTEIN) <br> * Column 1, lines 1-18; column 4, line 24 - column 7, line 54 * <br>--- | 1 | |
| A | CH-A- 313 994 (SCHILLING-VERWALTUNGS AG) <br>--- | 4 | |
| A | US-A-3 234 199 (REID) <br>----- | 1 | |

TECHNICAL FIELDS SEARCHED (Int. Cl.4)

B 01 D
B 01 J
C 07 K

The present search report has been drawn up for all claims

| Place of search | Date of completion of the search | Examiner |
|---|---|---|
| THE HAGUE | 08-02-1989 | WENDLING J.P. |